(19) **Europäisches Patentamt / European Patent Office / Office européen des brevets**

(11) **EP 4 380 805 B1**

(12) **FASCICULE DE BREVET EUROPEEN**

(45) Date de publication et mention de la délivrance du brevet:
**18.02.2026 Bulletin 2026/08**

(21) Numéro de dépôt: **22758568.4**

(22) Date de dépôt: **01.08.2022**

(51) Classification Internationale des Brevets (IPC):
***B60C 23/06*** *(2006.01)*

(52) Classification Coopérative des Brevets (CPC):
**B60C 23/064**

(86) Numéro de dépôt international:
**PCT/FR2022/051538**

(87) Numéro de publication internationale:
**WO 2023/012428 (09.02.2023 Gazette 2023/06)**

(54) **METHODE D'OBTENTION DE LA DEFORMATION D'UN PNEUMATIQUE SOUMIS A UN EFFORT EXTERIEUR EN ROULAGE**

VERFAHREN ZUR ERMITTLUNG DER DEFORMATION EINES REIFENS, DER BEIM ROLLEN EINER ÄUSSEREN SPANNUNG AUSGESETZT IST

METHOD FOR ASCERTAINING THE DEFORMATION OF A TYRE SUBJECTED TO AN EXTERNAL STRESS WHILE ROLLING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.08.2021 FR 2108542**

(43) Date de publication de la demande:
**12.06.2024 Bulletin 2024/24**

(73) Titulaire: **COMPAGNIE GENERALE DES ETABLISSEMENTS MICHELIN**
**63000 Clermont-Ferrand (FR)**

(72) Inventeurs:
• **NUYTTEN, Simon**
**63040 CLERMONT-FERRAND Cedex 9 (FR)**
• **MARTIN, Denis**
**63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
JP-A- 2014 222 252   US-A1- 2015 362 542
US-A1- 2020 056 983

EP 4 380 805 B1

## Description

### Domaine de l'invention

La présente invention concerne le domaine des signaux de mesure délivrés par des moyens de mesure embarqués sur l'ensemble monté d'un véhicule terrestre lors d'un roulage.

### Arrière-plan technologique

Les développements récents des ensembles montés connectés mesurant des grandeurs physiques de l'ensemble monté à l'aide de capteurs embarqués dans l'ensemble monté conduit à déterminer l'état de l'ensemble monté et donc ouvre la porte aux développements de services liés à la surveillance de l'état de l'ensemble monté. Si, des grandeurs générales mesurées telle que la pression de gonflage de l'ensemble monté ou la température de cet ensemble monté sont peu sensibles aux bruits de mesure générés par la rotation de l'ensemble monté sur un sol de rugosité aléatoire puisque ces grandeurs générales varient peu au cours de la rotation de l'ensemble monté, des grandeurs plus fines sont fortement sensibles aux phénomènes physiques liés à la rotation de l'ensemble monté. De plus, l'ensemble monté est soumis à des efforts externes. Certains sont liés au mouvement de l'ensemble monté comme la résistance au roulement. D'autres sont appliqués à tout instant et en particulier en statique comme la charge. Ces efforts appliqués peuvent influencer des grandeurs fines que l'on cherche à mesurer. Enfin, les nouveaux services nécessitent de nettoyer les grandeurs physiques directement mesurées avant de récolter l'information utile des signaux de mesure comme la déformation de l'enveloppe pneumatique.

Les systèmes de détermination de la déformation des pneus sont connus de US2015/362542 A1, US2020/056983 A1 et JP2014222252 A.

L'un des objets de l'invention qui va suivre a pour objectif de résoudre les problèmes de perturbations des signaux de mesure enregistrés par un capteur afin de ne recueillir qu'une mesure nettoyée des perturbations de certains phénomènes physiques dans le but d'obtenir une grandeur, vectorielle ou scalaire, de la déformation de l'enveloppe pneumatique.

Afin de mieux comprendre l'invention, on entend ici par les directions circonférentielle S, axiale A et radiale R, des directions définies par rapport au repère tournant de l'enveloppe pneumatique autour de son axe de rotation naturel. La direction radiale R est la direction s'éloignant perpendiculairement de l'axe de rotation naturel. La direction axiale A est la direction parallèle à l'axe de rotation naturel. Enfin la direction circonférentielle S forme un trièdre direct avec les directions radiale et axiale prédéfinies.

### Description de l'invention

L'invention porte sur une méthode d'obtention de la déformation d'une enveloppe pneumatique. L'enveloppe pneumatique est dans un état monté sur roue afin de constituer un ensemble monté en condition de roulage à une vitesse de rotation W soumis à des efforts externes, par exemple une charge statique. L'enveloppe pneumatique a un sommet, destiné à être en contact avec le sol qui est de révolution autour d'un axe naturel de rotation. La méthode comporte les étapes suivantes :

- Fixer au moins un capteur sur l'enveloppe pneumatique au droit du sommet de l'enveloppe pneumatique apte à générer au moins un signal de sortie sensible au mouvement subi par ledit capteur dans l'enveloppe pneumatique ;
- Réaliser l'acquisition d'au moins un premier signal Sig temporel comprenant au moins l'amplitude du mouvement lors d'un roulage ;
- Délimiter le premier signal sur un nombre $N^{TdR}$ de tours de roue, $N^{TdR}$ étant supérieur ou égal à 1, afin de construire un signal tour de roue $Sig^{TdR}$ ;
- Déterminer au moins une vitesse de référence $W^{reference}$ associée a au moins une partie du signal tour de roue $Sig^{TdR}$
- Normaliser la au moins une partie du signal tour de roue par une grandeur qui est une fonction F de la au moins une vitesse de référence $W^{reference}$ ;
- Rééchantillonner angulairement la au moins une partie du signal tour de roue $Sig^{TdR}$ ;
- Obtenir le signal spectral spect(Sig) de la au moins une partie du signal tour de roue normalisé rééchantillonné angulairement ;
- Définir au moins une grandeur spectrale sur le signal spectral spect(Sig) ;
- Identifier la déformation de l'enveloppe pneumatique $Def_\%$ comme une fonction G de la au moins une grandeur spectrale.

On entend ici par le terme « mouvement subi par le capteur », le déplacement ou la vitesse ou l'accélération qui est appliqué au capteur en absolu par rapport à un repère galiléen mais aussi la déformation ou la vitesse de déformation ou l'accélération de déformation qui est appliquée à ce capteur, c'est-à-dire en relatif entre les diverses unités élémentaires du capteur. De ce fait, le signal de sortie du capteur est sensible à l'une au moins de ces six composantes du mouvement du capteur.

Le signal récupéré du capteur est l'amplitude temporelle du mouvement du capteur au cours d'un roulage de l'ensemble monté dans les conditions énoncés. De ce fait, on visualise sur le signal acquis les variations en amplitude du mouvement sur une partie du tour de roue de l'enveloppe pneumatique dont potentiellement celles associées à la traversée de l'aire de contact par la partie de l'enveloppe pneumatique où est fixé le capteur mais aussi celles associées à d'autres zones spécifiques du tour de roue comme celle correspondant au secteur angulaire opposé à l'aire de contact qui est sensible à la contre flèche, ou celles correspondant aux secteurs angulaires situés à 90 degrés de l'aire de contact par rapport à l'axe de rotation. Dans toutes ces zones, des variations de mouvement du capteur sont potentiellement observables sur le signal de sortie selon la sensibilité du capteur.

Sur le premier signal acquis, on associe une vitesse de référence qui peut être identifiée sur ce premier signal ou issue d'une autre source comme un autre signal ou la sortie d'une grandeur d'un système externe à l'ensemble monté. Cette vitesse de référence est associée obligatoirement à la même trame temporelle que la partie du premier signal. Cette vitesse de référence sert à normaliser l'amplitude du premier signal à l'aide d'une fonction F dont la variable est la vitesse de référence. La fonction F peut être une fonction linéaire, une fonction puissance, une fonction exponentielle ou la fonction constante. En fonction de la dépendance de l'amplitude du signal du capteur à la vitesse de référence si cette dépendance est perçue comme un signal parasite de la déformation de l'enveloppe pneumatique, la normalisation du signal du capteur est entreprise. Ainsi, le premier signal normalisé devient indépendant de cette vitesse de référence. Par exemple cette vitesse de référence peut être la vitesse de rotation de l'ensemble monté ou la vitesse de translation de l'ensemble monté selon la direction de déplacement de l'ensemble monté. De ce fait, le premier signal peut être exploité indépendamment de la vitesse de référence qui est liée à la rotation de l'ensemble monté.

La méthode comprend aussi une étape de délimitation du premier signal Sig sur un nombre de tours de roue dans le but de profiter de la périodicité du signal du capteur avec la rotation naturelle de l'enveloppe pneumatique en condition de roulage. Ainsi, il sera possible de réaliser une analyse spectrale de qualité sur les données issues du signal tour de roue. Cependant, il n'est pas indispensable que le nombre de tours de roue soit entiers à cette étape, on peut avoir une délimitation du signal sur un nombre réel de tour de roue tant que ce nombre de tour de roue soit au moins supérieure à 1. Préférentiellement, il faut plusieurs tours de roue.

La méthode comprend aussi un rééchantillonnage angulaire du premier signal ou du signal tour de roue qui peut avoir lieu avant ou après l'étape de normalisation. Cette étape permet de transformer le signal temporel en un signal spatial en phasant le signal temporel par rapport à une ou plusieurs références angulaires de l'ensemble monté. Cette référence angulaire peut tout d'abord être prise sur le premier signal par une réponse spécifique du capteur à un azimut particulier au tour de roue. Mais, cette référence angulaire peut aussi être issue d'un autre signal d'un capteur qui partage une horloge commune avec le premier signal. Ce partage d'horloge ou synchronisation des signaux est naturelle si les deux capteurs sont issus du même dispositif ou si les signaux transitent vers un dispositif commun. Ce rééchantillonnage angulaire permet naturellement de générer un signal spatialement périodique au tour de roue. Il suffit pour cela de mener une interpolation des signaux sur un découpage angulaire figé pour générer un signal parfaitement périodique angulairement. Mais, au cas où l'ensemble monté est animé d'un mouvement à vitesse variable, ce rééchantillonnage permet malgré tout de générer un signal angulairement périodique.

La méthode comprend une étape de réalisation d'une analyse spectrale à partir de la partie du signal tour de roue rééchantillonnée angulairement et normalisé. Il convient à ce niveau d'assurer que la partie du signal de départ soit défini par un pas angulaire constant ce qui assure une discrétisation spatiale régulière du signal du capteur. Au besoin, l'étape de rééchantillonnage angulaire assure que le pas angulaire est fixe permettant d'assurer une analyse spectrale de qualité ce qui peut nécessiter une méthode d'interpolation des points de mesure pour redéfinir un signal à pas angulaire fixe.

La méthode comprend une étape de définition d'une grandeur ou plusieurs grandeurs spectrales associée au signal spectrale issue de l'étape précédente.

Enfin, la méthode comprend la détermination de la déformation de l'enveloppe pneumatique au travers d'une fonction G de la grandeur spectrale identifiée à l'étape précédente. Cette déformation s'exprime sous la forme d'un scalaire ou d'un vecteur qui est un invariant de l'enveloppe pneumatique en condition de roulage soumis à des efforts externes comme la charge statique.

Avantageusement, l'étape de détermination de la vitesse de référence $W^{reference}$ consiste à effectuer le rapport de la variation angulaire sur la durée temporelle séparant deux positions azimutales du capteur dans l'enveloppe pneumatique autour de l'axe naturel de rotation à partir du signal tour de roue $Sig^{TdR}$ ou à partir d'un signal phasé avec le signal tour de roue $Sig^{TdR}$, suivant la formule suivante :

[Math 1]

$$W^{\text{reference}} = \Delta(\alpha)/\Delta(t)$$

Où $\alpha$ est la position angulaire et t est l'abscisse temporelle associée à la position angulaire

Dans le cas où la vitesse de référence correspond à la vitesse de rotation angulaire de l'enveloppe pneumatique, cette vitesse de référence est calculée sur une variation angulaire du signal entre deux positions connues. Préférentiellement, cette vitesse de référence est évaluée sur une durée de signal inférieure à un tour de roue, ce qui permet de la définir rapidement et d'effectuer l'étape de normalisation d'une partie du premier signal au niveau du dispositif électronique associé au capteur. De plus, celle-ci permet alors de rééchantillonner angulairement la partie du premier signal avec une meilleure précision si l'enveloppe pneumatique est animée d'une vitesse angulaire variable. En effet, au niveau d'un tour de roue, la variation de vitesse angulaire est nécessairement faible pour un pneumatique dont le développement peut s'étendre à 2 mètres pour un pneumatique pour véhicule particulier ou 3 mètres pour un pneumatique pour poids lourds. L'accélération ou la décélération appliquée à l'enveloppe pneumatique sur cette longueur est, par nature, faible avec les systèmes d'entrainement et de freinage des véhicules actuels. Bien entendu, il est tout à fait possible d'intégrer une variation de vitesse angulaire au cours du tour de roue avec un azimutage plus fin afin de tenir compte par exemple des micro-variations de vitesse angulaire qui apparaissent au cours du tour de roue comme par exemple, avant et après la traversée de l'aire de contact ou lors de la rencontre avec une discontinuité de déplacement au sol, comme une barrette transversale sur le sol. Cette précision sur la vitesse de référence au cours du tour de roue permet alors une normalisation du signal plus précis mais aussi une précision angulaire accrue sur la position angulaire des points de mesure du premier signal au cours de l'étape de rééchantillonnage angulaire, ce qui améliore la précision recherchée pour capter des variations minimes au cours du tour de roue.

Selon un mode de réalisation particulier, les positions azimutales de l'enveloppe pneumatique sont comprises dans le groupe comprenant une position angulaire détectable sur le signal tour de roue $\text{Sig}^{\text{TdR}}$ correspondant à l'entrée dans l'aire de contact, la sortie de l'aire de contact ou la position centrale de l'aire de contact ou toute position angulaire définie à partir du signal phasé avec le signal tour de roue $\text{Sig}^{\text{TdR}}$.

Ce sont des positions azimutales ayant une incidence sur le signal du capteur de mouvement qui correspondent à des positions angulaires spécifiques. De ce fait, ces positions sont facilement repérables sur le signal du capteur. De plus, il est aisé de leur assigner leurs références azimutales. En effet, la position centrale de l'aire de contact correspond à une position azimutale de 0 ou 180 degrés par rapport à la normale au sol. Si on détermine une longueur de l'aire de contact au travers des points d'entrée et de sortie de l'aire de contact, on peut connaitre l'angle formé par l'aire de contact comme le ratio de la longueur de l'aire de contact sur le développement de l'enveloppe pneumatique ramené à un tour de roue, soit 360 degrés. On répartit équitablement le secteur formé par l'aire de contact de part et d'autre de la normale au sol. Bien entendu, l'accès à un autre signal que le premier signal permet aussi d'avoir une sectorisation angulaire plus fine que le tour de roue comme un codeur angulaire.

Selon un mode de réalisation très particulier, la détermination de l'entrée ou la sortie de l'aire de contact sur le premier signal comprend les étapes suivantes :

- Définir une valeur seuil B qui est fonction du au moins un maximum d'au moins une seconde partie du premier signal ;

- Identifier une première série d'incréments I, correspondant à l'abscisse t du au moins un premier signal où le premier signal Sig franchit la valeur seuil B suivant un sens de franchissement donné ;

- La totalité des incréments I ou les incréments I de même parité représente l'entrée ou la sortie de l'aire de contact

Avantageusement, la valeur seuil B est une valeur compris entre 0,1 et 0,5 du au moins un maximum d'au moins une partie du premier signal.

C'est un mode de réalisation attaché à la détection des positions associées à l'entrée et la sortie de l'aire de contact. La variation de mouvement forte qui se passent au niveau de ces deux positions du tour de roue permet d'appliquer une méthode élémentaire de détermination de ces deux points en traitant directement le premier signal au niveau de l'électronique du capteur par exemple. Selon, le choix de détection du sens de franchissement du seuil, il est possible de déterminer directement l'entrée ou la sortie de l'aire de contact sur divers signaux. La diversité des signaux porte d'une part sur la direction d'observation de la variable, variation de mouvement dans la direction radiale ou circonférentielle de l'enveloppe pneumatique et d'autre part sur la nature du signal, signal accélérométrique, signal de déformation selon une direction radiale etc...

Dans l'absolu, on ne cherche pas à identifier la position précise de l'aire de contact qui dépend des phénomènes aléatoires au tour de roue. La méthode mise en place, au niveau de l'étape d'agrégation des données, ne requièrent pas forcément une précision accrue sur la position absolue de l'entrée et de la sortie de l'aire de contact. La robustesse de la méthode permet de s'assurer d'une grande reproductibilité de la détermination de la position centrale de l'aire de contact quelle que soit la nature du premier signal qui est le résultat des positions d'entrée et de sortie de l'aire de contact.

Avantageusement, le pas angulaire est inférieur à 18 degrés.

Ceci permet de s'assurer que l'un des points de mesure est situé au niveau de l'aire de contact. De ce fait, des variations de mouvement conséquent seront au moins observées entre ce point d'échantillonnage et ces plus proches voisins permettant de déterminer un point d'entrée et de sortie de l'aire de contact sur le premier signal

Très avantageusement, le pas angulaire est inférieur à 6 degrés, préférentiellement inférieur à 3 degrés.

L'utilisation d'un pas angulaire plus fin permet de s'assurer de capter plusieurs points de mesure au niveau de l'aire de contact et de ce fait d'observer sur le premier signal des phénomènes de déformation à l'échelle de l'aire de contact et non plus au niveau du tour de roue. Cette finesse d'observation donne accès à des grandeurs observables différentes qui sont pertinentes pour certaines applications spécifiques. Par exemple, dans le cas de condition de route mouillée, on observe au niveau de l'aire de contact une poche d'eau a à l'avant de l'aire de contact qui modifie la géométrie de l'aire de contact. L'observation de plusieurs points au nveau de l'aire de contact permet de mesurer l'ampleur de cette poche d'eau et de ces effets sur la mécanique de l'enveloppe pneumatique.

Selon un mode de réalisation très particulier, la méthode comprend une étape d'agrégation des données de la au moins une partie du signal tour de roue Sig$^{TdR}$ rééchantillonnée angulairement et normalisée sur au moins une sous partie de la au moins une partie du signal tour de roue Sig$^{TdR}$ rééchantillonnée angulairement et normalisée, la sous partie de la au moins une partie du signal tour de roue Sig$^{TdR}$ rééchantillonnée angulairement et normalisée devenant la au moins une partie du signal tour de roue Sig$^{TdR}$ rééchantillonnée angulairement et normalisée.

Avantageusement, la sous partie de la au moins une partie du signal tour de roue Sig$^{TdR}$ est un multiple entier du tour de roue.

La méthode comprend préférentiellement une étape d'agrégation des données qui permet d'agréger les données de plusieurs périodes angulaires du tour de roue sur une portion de tour de roue, que celle-ci soit un tour de roue entier ou un multiple entier de tour de roue. Ainsi, on multiplie les données du signal sur cette sectorisation angulaire partielle, ce qui permet de tenir compte de tous les aléas à l'échelle d'une période de tour de roue comme la granulométrie du sol, un obstacle isolé sur la chaussée. L'agrégation consiste à moyenner les données des divers tours de roue en une unique valeur sur un azimut choisie de la sectorisation angulaire. Cela revient à filtrer ou moyenner les phénomènes aléatoires au tour de roue sur plusieurs tours de roue, ce qui robustifie la qualité du signal du capteur. Bien entendu, il est nécessaire que le pas angulaire spécifique pour la sectorisation angulaire sortie de l'étape d'agrégation soit un pas angulaire fixe, ce qui assure une analyse spectrale de qualité.

De plus, si le pas angulaire est fin, il permet de prendre en compte des variations minimes angulairement, ces variations étant périodiques au tour de roue, à l'aide de plusieurs tours de roue de façon homogène. Ces variations minimes sont obtenues sans avoir une discrétisation temporelle élevée bien que plus cette discrétisation soit élevée, moins la longueur du signal nécessaire pour déterminer ces variations minimes est importante. C'est cette étape qui garantit la valeur ajoutée au signal initial du capteur.

Pour déterminer la déformation globale de l'enveloppe pneumatique soumis à des efforts externes, la sous-partie optimale défini à l'étape d'agrégation des données est le tour de roue ou un multiple entier de tour de roue pour profiter de la périodicité angulaire du tour de roue. L'étape d'agrégation des données peut avoir lieu sur un tour de roue qui est la période angulaire naturelle de l'enveloppe pneumatique. Ainsi, la méthode est bien adaptée pour observer les déformations de l'enveloppe pneumatique au tour de roue. Cela permet d'avoir une taille de signal à analyser raisonnable tout en se focalisant sur un secteur angulaire d'observation et profiter quand même de la périodicité naturelle de l'enveloppe pneumatique au tour de roue.

Selon un mode de réalisation préférentiel, l'étape d'agrégation des données comprend une des méthodes comprises dans le groupe comprenant la moyenne sur un intervalle de décile, la médiane, la sélection ou l'intervalle de déciles, les méthodes d'interpolation, la moyenne pondérée ou non, l'optimisation de modèle paramétrique de la déformée du pneumatique

L'agrégation a pour vocation de caler les mesures effectuées sur une nouvelle répartition angulaire du premier signal afin de donner du sens à l'ensemble des données brutes de mesure en ne privilégiant pas une zone par rapport à une autre en raison d'une abondance de points de mesure. L'étape d'agrégation a pour objectif de délivrer un signal équilibré en termes de points de mesure avec un pas angulaire choisi par l'opérateur selon les déformations de l'enveloppe pneumatique que l'on souhaite observer. A cet effet, la méthode d'optimisation de modèle paramétrique de la déformée du pneumatique est bien adaptée puisque ce modèle paramétrique peut être théorique ne prenant pas en compte les bruts de mesure liées à 'ensemble de la chaine de mesure appliquée. Le signal de sortie de l'étape d'agrégation est une sortie théorique du modèle paramétrique ayant la dispersion minimale avec l'ensemble des points de mesure enregistrés.

Selon un mode de réalisation particulier, la au moins une grandeur spectrale est identifiée sur le premier massif fréquentiel positif du signal spectral spect(Sig).

Préférentiellement, la au moins une grandeur spectrale identifiée est comprise dans le groupe comprenant la valeur maximale, la valeur médiane, la valeur moyenne, la bande passant du premier massif, aire sous la courbe du premier massif., la fréquence de la valeur médiane, la fréquence de la valeur moyenne, la fréquence de la valeur maximale.

Préférentiellement, la fonction G est une fonction linéaire de la au moins une grandeur spectrale.

Le demandeur a été surpris de constater que l'étude du premier massif fréquentiel positif du signal spectral spec(Sig) suffisait pour identifier une ou plusieurs grandeurs associées à ce premier massif qui soit pertinent pour déterminer au terme de la méthode la déformation de l'enveloppe pneumatique avec une qualité suffisante. Les grandeurs les plus sensibles à la déformation de l'enveloppe pneumatique sont énumérées dans la liste fourni. Il s'agit de grandeur standard d'un signal spectral ne nécessitant que peu de moyens de calculs, ce qui est favorable à la méthode. De plus, ces grandeurs sont sensibles qu'à la déformation de l'enveloppe pneumatique et beaucoup moins à des grandeurs secondaires. Par conséquent, ces grandeurs sont bien adaptées par exemple à la déformation générale de l'enveloppe pneumatique dans son ensemble comme la déformation générée par des efforts globaux à l'échelle de l'enveloppe pneumatique comme la charge statique.

Dans ce cas, la fonction G n'a pas besoin d'être sophistiqué, le demandeur a constatée qu'une fonction G linéaire d'une ou plusieurs grandeurs spectrales permettait de déterminer convenablement la déformation de l'enveloppe pneumatique selon les diverses conditions d'usage de l'enveloppe pneumatique soumise à des efforts externes et notamment des variations de charge statique.

Selon un mode de réalisation privilégié, le capteur est compris dans le groupe comprenant accéléromètre, capteur piézoélectrique, capteur magnétique, capteur inductif, capteur capacitif.

Tous ces types de capteur permettent d'observer des variations de mouvement notamment au moment du passage dans l'aire de contact qui est une zone particulière du tour de roue. Certains de ces capteurs permettent d'avoir une valeur discrète sur une étendue spatiale réduite comme l'accéléromètre. D'autres permettent d'avoir une valeur discrète sur une large étendue spatiale ce qui permet de limiter l'influence de phénomènes locaux comme le capteur piézoélectrique par exemple. Certains capteurs sont influencés par des phénomènes physiques extérieures telle que la gravité terrestre comme l'accélération permettant de récupérer une information azimutale au besoin.

Selon un mode de réalisation préférentiel, l'étape d'agrégation des données comprend une des méthodes comprises dans le groupe comprenant la moyenne sur un intervalle de décile, la médiane, la sélection ou l'intervalle de déciles, les méthodes d'interpolation, la moyenne pondérée ou non, l'optimisation de modèle paramétrique de la déformée du pneumatique

L'agrégation a pour vocation de caler les mesures effectuées sur une nouvelle répartition angulaire du premier signal afin de donner du sens à l'ensemble des données brutes de mesure en ne privilégiant pas une zone par rapport à une autre en raison d'une abondance de points de mesure. L'étape d'agrégation a pour objectif de délivrer un signal équilibré en termes de points de mesure avec un pas angulaire choisi par l'opérateur selon les déformations de l'enveloppe pneumatique que l'on souhaite observer. A cet effet, la méthode d'optimisation de modèle paramétrique de la déformée du pneumatique est bien adaptée puisque ce modèle paramétrique peut être théorique ne prenant pas en compte les bruts de mesure liées à 'ensemble de la chaine de mesure appliquée. Le signal de sortie de l'étape d'agrégation est une sortie théorique du modèle paramétrique ayant la dispersion minimale avec l'ensemble des points de mesure enregistrés.

Selon un mode de réalisation spécifique, le mouvement du capteur est décrit par l'accélération.

Ce type de capteur permet d'obtenir une information ponctuelle du mouvement du pneumatique du fait de son implantation minimale sur l'enveloppe pneumatique. De ce fait, le capteur procure peu de perturbations aux variations de mouvement de l'enveloppe pneumatique. La miniaturisation du capteur permet aussi de multiplier les directions d'observations en employant des accéléromètres biaxes ou tri axes qui délivrent au même point matériel d'implantation du capteur, plusieurs signaux selon des directions orthogonales. Enfin, l'accélération est un signal sensible du mouvement ce qui assure une grande sensibilité du capteur au mouvement de l'enveloppe pneumatique ce qui permet d'analyser finement des phénomènes locaux qui pourraient avoir lieu au niveau de l'aire de contact par exemple.

Avantageusement, ayant phasé le premier signal Sig par rapport à une position angulaire de l'enveloppe pneumatique, une correction Corr est apportée au premier signal Sig pour prendre en compte l'effet de la gravité terrestre avant l'étape de normalisation.

L'inconvénient du signal accélérométrique est que celui-ci est sensible à la gravité terrestre s'il est orienté sensiblement parallèle à la gravité terrestre. Dans le cas de l'enveloppe pneumatique, le capteur est lié en rotation à l'enveloppe pneumatique. De ce fait, lorsque le capteur est orienté radialement ou circonférentiellement, l'amplitude du signal du capteur est influencée par la gravité terrestre au cours d'un tour de roue. En effet, celui-ci se retrouve dans le signal sous la forme d'une fonction sinusoïdale d'amplitude liée à la gravité terrestre présentant ses nœuds à des azimuts de l'enveloppe pneumatique séparés de 180 degrés lorsque l'orientation du capteur est alignée avec le vecteur gravitationnel, c'est -à- dire sensiblement perpendiculaire au sol. Inversement, lorsque le capteur est orienté parallèle au sol, ce qui correspond à deux positions azimutales distantes de 180 degrés l'une de l'autre et généralement à +/- 90 degrés du vecteur gravitationnel, le signal du capteur n'est pas influencé par la gravité terrestre. Afin d'éliminer cette composante parasite du signal accélérométrique, il convient de combiner l'amplitude du signal par une fonction sinusoïdale correspondant en ayant phasé le premier signal du capteur avec la verticale au sol correspondant à la direction du vecteur gravitationnel.

Selon un mode de réalisation très spécifique, le premier signal Sig comprend l'amplitude de l'accélération selon la direction normale au sommet de l'enveloppe pneumatique.

C'est l'une des deux orientations sensibles à la gravité terrestre pour l'accélération. L'orientation du capteur au sein de l'enveloppe pneumatique est plus aisée selon cette direction et permet de concentrer l'influence de la gravité terrestre sur les positions azimutales de 0 et 180 degrés par rapport à la droite perpendiculaire au sol. Ainsi, les positions azimutales situées à +/- 90 degrés de ces positions ne sont pas bruitées par la gravité terrestre ce qui permet d'exploiter directement les signaux de l'accéléromètre dans ces secteurs angulaires spécifiques sans l'étape de correction de la gravité terrestre.

Très avantageusement, la fonction F est proportionnelle au carré de la vitesse de référence $W^{reference}$.

Dans le cas d'un signal de capteur de nature accélérométrique par exemple dans la direction radiale ou circonférentielle à l'enveloppe pneumatique, le signal du capteur est influencé par la fonction carré de la vitesse de référence. Ainsi, l'étape de normalisation emploie de préférence la fonction carré de la vitesse de référence, préférentiellement la vitesse de référence est alors la vitesse angulaire de l'enveloppe pneumatique.

Description brève des dessins

L'invention sera mieux comprise à la lecture de la description qui va suivre donnée uniquement à titre d'exemple non limitatif et faite en se référant aux figures annexées dans lesquelles les mêmes numéros de référence désignent partout des parties identiques et dans lesquelles :

- La figure 1 présente un synoptique de la méthode selon l'invention.
- La figure 2 présente une illustration d'un premier signal d'un capteur.
- La figure 3 présente le rééchantillonnage angulaire du signal tour de roue.
- La figure 4 présente une illustration du signal rééchantillonné et normalisé du signal tour de roue.
- La figure 5 présente une illustration du signal final après agrégation des données sur une sous partie du signal tour de roue.
- La figure 6 est une illustration du signal spectral spect(Sig) du tour de roue

**Description détaillée de modes de réalisation**

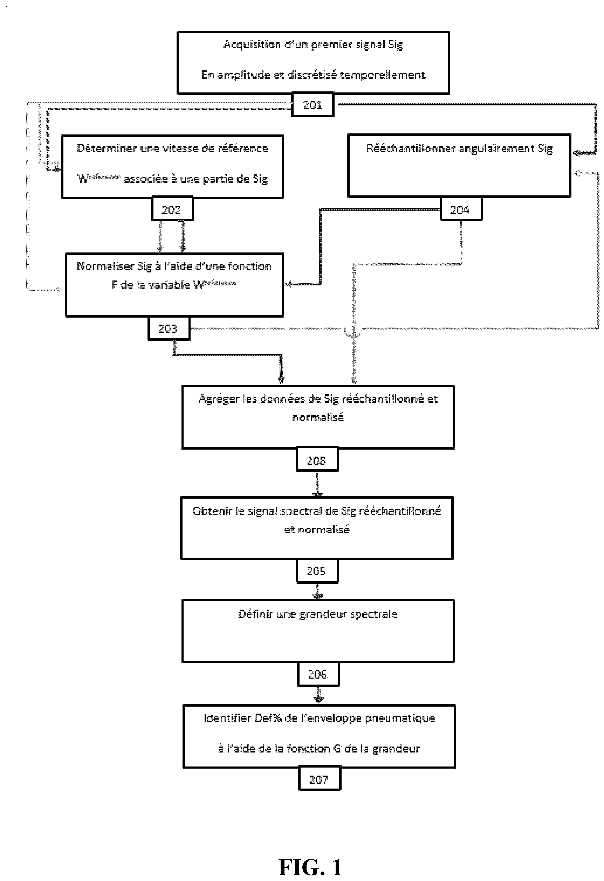

La Fig 1 représente un synoptique de la méthode selon l'invention. En partant d'un premier signal Sig obtenu par acquisition temporelle 201 de la sortie en amplitude d'un capteur de mouvement lors d'un roulage de l'enveloppe pneumatique sur laquelle est monté le capteur, on effectue un certain nombre d'étapes suivant divers cheminements possibles pour obtenir un scalaire représentatif de la déformation de l'enveloppe pneumatique finalement.

Le premier cheminement consiste à partir du signal temporel à la sortie de l'étape 201, à déterminer une vitesse de référence $W^{reference}$ 202 de l'enveloppe pneumatique dans sa configuration ensemble montée, c'est-à-dire enveloppe pneumatique montée sur jante et gonflée. Ici, le premier signal Sig 101 est déjà délimité sur un certain nombre de tours de roue, 12 exactement. Par cons séquent le premier signal Sig 101 est confondu avec le signal tour de roue $Sig^{TDR}$. Cette vitesse de référence peut être une vitesse angulaire liée à la rotation naturelle de l'enveloppe pneumatique autour de son axe de rotation mais il peut aussi s'agir de la vitesse linique de translation de l'enveloppe pneumatique selon la direction de déplacement de celle-ci. Cette grandeur peut être déterminée à partir du signal tour de roue $Sig^{TDR}$ mais aussi être déterminé à partir d'un autre signal phasé temporellement avec le premier signal et donc le signal tour de roue $Sig^{TDR}$.

Ensuite, il convient de normaliser le signal tour de roue 203 à partir du premier signal issu de l'étape 201 par une fonction F de la variable $W^{reference}$ issue de l'étape 2. A la sortie de cette étape 203, on obtient un signal normalisé du mouvement de l'enveloppe pneumatique dans une description temporelle.

Il convient alors de rééchantillonner angulairement le signal normalisé afin de retrouver un signal périodique angulairement au tour de roue au travers de l'étape 204. Ainsi, à la fin de cette étape 204, on obtient un signal normalisé et rééchantillonné angulairement sur plusieurs tours de roue.

Le second cheminement consiste à partir du premier signal Sig, qui est aussi le signal tour de roue $Sig^{TDR}$, issu de la sortie de l'étape 201, à rééchantillonner le premier signal Sig angulairement en phasant ce premier signal à l'aide de la forme du premier signal ou en ayant un autre signal temporellement phasé avec le premier signal. L'autre signal émanant d'un autre capteur, ou autre voie du même capteur comme l'accélération circonférentielle d'un accéléromètre tridimensionnel. Ce rééchantillonnage angulaire du premier signal permet de générer un signal périodique au tour de roue à la sortie de l'étape 204

Après avoir phasé ce signal angulaire à l'aide d'un autre signal temporel, on détermine une vitesse de référence provenant d'un autre signal temporel phasé avec le premier signal, Préférentiellement c'est le même autre signal ayant servi à rééchantillonner angulairement le premier signal à l'étape 204. On identifie ainsi une vitesse de référence $W^{reference}$ à la sortie de l'étape 202.

Ensuite, la vitesse de référence permet de normaliser le signal rééchantillonné angulairement issus de l'étape 204 à l'aide d'une fonction de la variable vitesse de référence. On obtient ainsi un signal rééchantillonné et normalisé à la sortie de l'étape 203.

Optionnellement, quel que soit le cheminement fait, on agrège les données du signal rééchantillonné normalisé issus de l'étape 204 sur le premier cheminement ou de l'étape 203 sur le second cheminement. Cette agrégation des données est faite sur une sous partie du signal d'entrée qui est un multiple du tour de roue, idéalement tour de roue, puisque le signal rééchantillonné et normalisé est périodique au tour de roue par nature. A ce niveau, il est parfois nécessaire de rééchantillonner le signal agrégé issus de l'étape 207 avec un pas angulaire fixe pour effectuer une analyse spectrale de qualité dessus.

En alternative, si le premier signal 101 est pollué par des phénomènes physiques connus comme un signal accéléromètre influencé par la gravité terrestre, il est parfois utile bien que pas indispensable de réaliser une correction du premier signal de ce phénomène physique pour limiter le bruit parasité généré par ce phénomène physique. Cette correction peut avoir lieu entre n'importe quelle étape entre l'étape 201 et 204 mais nécessairement avant l'étape 205 d'agrégation des données, ce qui permet d'améliorer la qualité du signal de déformation de l'enveloppe pneumatique. Si la correction a lieu après l'étape de normalisation, il conviendra aussi de normaliser la correction pour ne pas introduire une erreur de correction.

Ensuite on effectue une analyse spectrale 205 du signal tour de roue normalisé rééchantillonné à l'étape 204 ou 203 selon le cheminement, celui-ci étant périodique au tour de roue. Si le pas angulaire n'est pas régulier, il conviendra d'effectuer une interpolation des points de mesures sur des points fictifs régulièrement espacé sur le signal. Eventuellement, l'étape d'analyse spectrale 205 est mené postérieurement à une étape d'agrégation des données 207 qui délivre un signal avec un pas angulaire fixe.

Le Signal spectral issu de l'étape 205 est analysé pour extraire une ou plusieurs grandeurs spectrales au cours de l'étape 206. Cette ou ces grandeurs spectrales alimenteront une fonction G qui délivra un vecteur, préférentiellement un scalaire, qui est un invariant de la déformation de l'enveloppe pneumatique en condition de roulage soumis à des efforts externes.

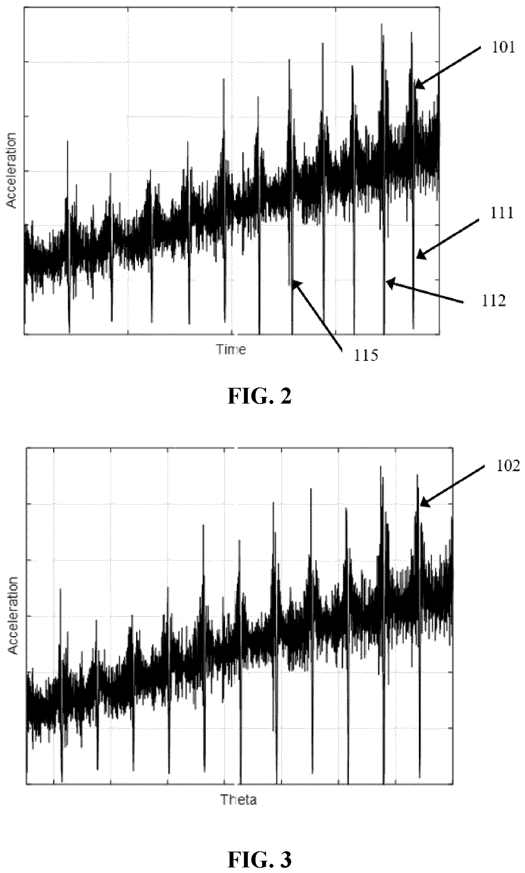

Les Fig. 2 à 4 sont une illustration de la méthode par le second cheminement décrit dans le synoptique de la Fig. 1. L'illustration est faite sur un accéléromètre fixé au droit du sommet d'une enveloppe pneumatique fixé sur la gomme intérieure de l'enveloppe pneumatique (en anglais « inner liner »). Ici, l'enveloppe pneumatique est de la Marque MICHELIN CrossClimate en dimension 265/65R17 sous une charge statique de 800daN lorsqu'il est monté sur un véhicule automobile. L'ensemble monté a été gonflé à 3 bars. Les mesures ont été effectuées lors d'un roulage du véhicule sur des circuits asphaltés de rugosité variée dans des conditions standards de vitesse et de charge appliquée selon le marquage du pneumatique. L'ensemble monté est situé sur l'essieu avant du véhicule. Les mesures ont été ici faites en conduite en ligne droite majoritairement.

Sur la Fig. 2, on visualise un signal temporel 101 acquis avec une fréquence d'acquisition du signal de 3200Hz permettant d'avoir une très fine discrétisation du signal. Celui-ci enregistre donc toutes les variations de mouvement de type accélération au niveau du sommet de l'enveloppe pneumatique au cours du roulage. Celui-ci a été délimité sur 12 tours de roue afin de constituer le signal tour de roue $Sig^{TDR}$.

L'enregistrement de la Fig. 2 a été faite en phase d'accélération du véhicule ce qui se traduit par une augmentation de l'amplitude du signal accélérométrique. Le capteur est ici un accéléromètre mono axe monté radialement par rapport au sommet de l'enveloppe pneumatique avant de constituer l'ensemble monté par des techniques usuelles de fixation connues de l'état de l'art. La transmission des données a été faite par une communication sans fil entre un dispositif électronique connecté galvaniquement à l'accéléromètre et un second dispositif radiofréquence placé au niveau du véhicule. Dans ce cas particulier, les post traitements de mesure ont été effectués au niveau du véhicule. Cependant, il est tout à fait envisageable de les réaliser au niveau du premier dispositif électronique muni d'un microcontrôleur, voire d'un microprocesseur couplé à un espace mémoire suffisant pour effectuer les opérations mathématiques élémentaires que nécessitent la méthode.

Ici, la première étape a consisté déterminer la vitesse de référence en prenant comme vitesse de référence la vitesse angulaire de rotation. Pour cela, il convient de phaser le premier signal temporel 101 avec une position azimutale de référence du tour de roue. A cet effet, le premier signal 101 présente régulièrement des chutes du niveau d'amplitude assez forte 111, 112 qui traduit la traversée de l'aire de contact par le secteur angulaire où est situé l'accéléromètre. Par nature, ces descentes, respectivement ces remontées, de ces chutes 111, 112 représentent l'entrée, respectivement la sortie de l'aire de contact. On définira le centre de l'aire de contact comme le milieu de l'intervalle séparant l'entrée et la sortie de l'aire de contact. On affectera à ce centre la position azimutale 0 degrés qui sera notre référence azimutale. En prenant une seconde référence angulaire sur la prochaine chute du signal 112 par exemple, on détermine sur le signal 101 un tour de roue de 360 degrés et un intervalle temporelle associée à ce tour de roue. On définira la vitesse de référence W<sup>reference</sup> comme le rapport de la variation angulaire entre les deux centres de l'aire de contact par l'intervalle temporel séparant ces deux positions azimutales. On affectera la vitesse de référence W<sup>reference</sup> à la partie du signal situé entre ces deux centres de l'aire de contact. Bien entendu, on peut aussi considérer deux chutes 111, 115 non contigües du signal temporel 101 pour déterminer une seconde vitesse de référence W<sup>reference</sup> et affecter cette seconde vitesse à la partie du signal 101 située entre les chutes 111 et 115.

La Fig. 3 présente le résultat de l'étape de rééchantillonnage angulaire du signal 101 temporel. Ainsi, en profitant de la détermination des centres de l'aire de contact pour chaque chute du signal temporel effectuées à l'étape précédente, on phase facilement le signal temporel au tour de roue sur 360 degrés. On convient alors de répartir linéairement les points discrétisés de mesure sur le tour de roue. Même si une erreur de positionnement angulaire est réalisée à cette étape, une interpolation linéaire effectuée par exemple lors de l'étape d'agrégation des données permettra de lisser les résultats et de minimiser l'erreur de positionnement angulaire. De façon plus sophistiquée, ayant évalué une vitesse de référence à chaque tour de roue. Il est possible d'affecter des vitesses angulaires qui évoluent au tour de roue en prenant en compte les vitesses de référence des tours contigus. Pa exemple, ayant déterminé les vitesses de références sur trois tours consécutifs, on peut affecter sur le tour de roue central, une première vitesse de référence sur le premier quart de tour de roue comme étant, la vitesse barycentre de la vitesse de référence du tour précédent pondérée 2 et de la vitesse de référence du tour actuel pondérée 1. Le quart suivant aura une vitesse de référence comme étant la vitesse barycentre de la vitesse de référence du tour actuel pondérée 2 par la vitesse de référence du tour précédent pondérée 1. Le troisième quart de tour de roue aura une vitesse de référence comme étant la vitesse barycentre de la vitesse de référence du tour actuel pondérée 2 par la vitesse de référence du tour suivant pondérée 1. Enfin le dernier quart de tour de roue aura une vitesse de référence comme étant la vitesse barycentre de la vitesse de référence du tour actuel pondérée 1 par la vitesse de référence du tour suivant pondérée 2. On répartit l'ensemble des points de mesure discrétisés sur chaque quart de tour de roue proportionnellement au rapport des vitesses de référence de chaque quart de tour sur la vitesse de référence du tour actuel. D'autres méthodes de lissage des points peuvent aussi être effectuées. Ici, la discrétisation spatiale des points n'est pas régulière en raison de la vitesse de roulage variable. Il est tout à fait possible de rendre cette discrétisation des points du signal 102 régulière en appliquant une méthode d'interpolation des points de mesure sur une répartition angulaire donnée au tour de roue. Cela permet alors d'obtenir un signal 102 rééchantillonné angulairement avec un pas angulaire régulier. La Fig. 3 montre le signal rééchantillonné angulairement 102 qui est périodique au tour de roue ave une discrétisation quelconque des points de mesure.

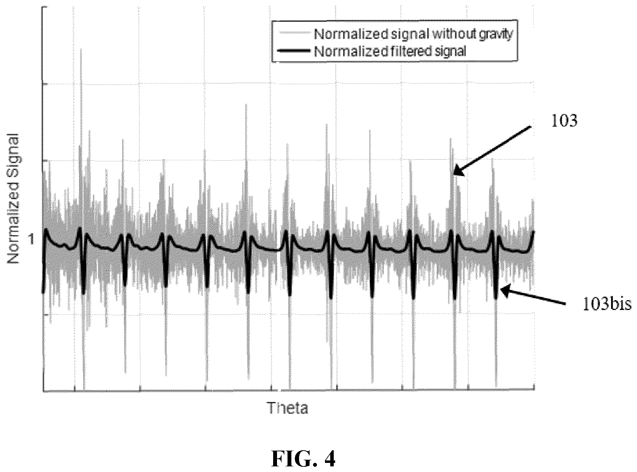

La Fig. 4 présente le résultat de l'étape de normalisation du premier signal 102 rééchantillonné angulairement sans interpolation des points. Ainsi, en profitant de la périodicité au tour de roue du premier signal rééchantillonné, on découpe facilement le signal angulaire au tour de roue ou sur un multiple du tour de roue comme illustré à la Fig. 4, ici sur 12 tours de roue. L'étape de normalisation consiste à diviser l'amplitude du signal par une fonction de la vitesse de référence associé à chaque partie de tour de roue. La vitesse de référence ayant été déterminée lors de la première étape du traitement du signal 101 par exemple. La fonction employée ici est le carré de la vitesse de référence, la vitesse de référence étant une vitesse angulaire. Le résultat observé sur les courbes 103 et 103 bis est qu'entre chaque tour de roue, l'amplitude du signal normalisé est similaire. On n'observe plus les variations d'amplitude fortes entre les divers tours de roue effectués à des vitesses différentes et sur des routes différentes. De plus, le signal se centre sur la valeur unité. Ensuite, on superpose alors les segments de tours de roue sur le même intervalle angulaire d'une longueur qui est un multiple entier de 360 degrés qui sont matérialisés par les courbes en gris formant ici un faisceau de courbe 103. Cela permet de se rendre compte de la dispersion de mesure entre les tours de roue, ce qui est accentuée par le fait que les signaux n'ont pas été corrigés de la gravité terrestre. Cependant si on applique un filtre passe bas, on obtient la courbe noire 103 bis qui est beaucoup moins chahuté puisque nettoyé des bruits parasites. Cela permet de s'apercevoir que le signal 103 bis est périodique au tour de roue avec des variations faibles entre les tours de roue. A la fin de cette normalisation du signal 102, on obtient ici un signal 103 rééchantillonné angulairement et normalisé. La Fig. 4 montre le signal rééchantillonné angulairement normalisé 103 qui est centré sur la valeur unité comme l'atteste le filtre appliqué sur la courbe 103bis.

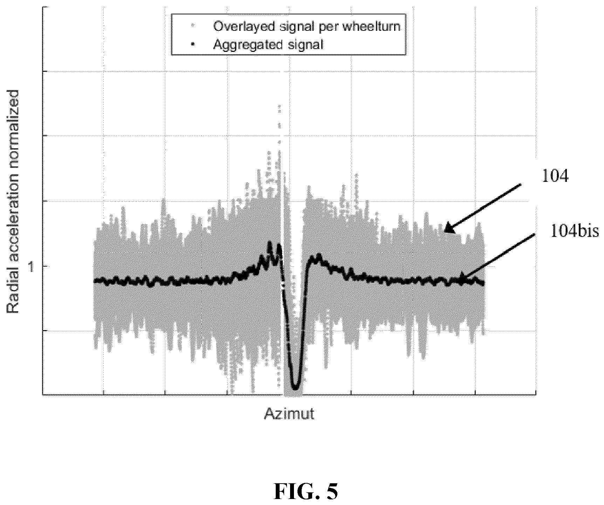

La Fig. 5 est le résultat de l'étape d'agrégation des données issus du signal 103 de l'étape précédente qui est une étape optionnelle. Ici, on superpose alors les segments de chaque tour de roue sur le même intervalle angulaire d'une longueur de 360 degrés qui sont matérialisés par les courbes en gris formant ici un faisceau de courbe 104. Cela permet de se rendre compte de la dispersion de mesure entre chaque tour de roue, ce qui est accentuée par le fait que les signaux n'ont pas été corrigés de la gravité terrestre. Cependant si on applique une correction de la gravité terrestre à chaque tour de roue avant l'étape de normalisation puisque l'accéléromètre est ici sensible à la gravité terrestre, l'agrégation des données par une méthode de la moyenne sur un intervalle de décile détermine la courbe 104 bis qui bien plus stable au tour de roue. Cela permet d'obtenir le signal de déformation de l'enveloppe pneumatique soumis à des efforts extérieurs, en particulier la charge statique dans ce cas, Ce signal 104bis est représentatif de la mesure de l'enveloppe pneumatique en condition de roulage à vitesse variable sur sol de rugosité quelconque. Cette courbe est un invariant de l'enveloppe pneumatique en condition de roulage sous charge statique dans un état gonflé et monté sur jante

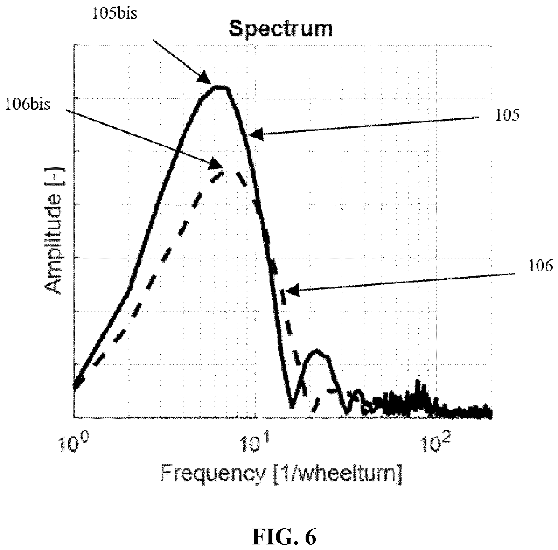

La Fig. 6 montre le spectre du signal tour de roue normalisé et rééchantillonnée angulairement avec un pas angulaire fixe de 0,1 degrés qui a été délimité sur 12 tours de roue. Afin de limiter les phénomènes hautes fréquences, le signal issu de l'étape 203 par le premier cheminement ou l'étape 204 par le second cheminement a été préalablement filtré à l'aide d'un filtre passe bas d'un trentième de tour de roue.

Le signal filtré ou ici le signal issu de l'étape d'agrégation à l'étape 207 a ensuite été analysé spectralement à l'aide d'une transformée de fourrier avant d'obtenir la courbe 105 qui est la représentation de l'amplitude de la transformée de fourrier sur une bande de fréquence limité. Il ressort de cette courbe divers massifs spectraux dont un premier d'amplitude importante. Cependant des massifs suivants ne sont pas non plus négligeables.

Sur cette réponse spectrale 105, il est possible de recueillir de multiples grandeurs spectrales. Dans notre cas, on se focalisera sur le premier massif mais l'analyse peut aussi avoir lieu sur les massifs suivants.

Afin de se rendre compte de la sensibilité de lé méthode, la Fig. 6 fait apparaitre une seconde courbe en pointillé 106 qui correspond à la réponse spectrale du même capteur fixé sur le même ensemble monté pour une charge statique différente et une pression de gonflage différente en ayant permuté l'ensemble monté entre les essieux avant et arrière du véhicule. Ainsi, nécessairement la réponse mécanique de l'enveloppe pneumatique à ses deux variables, la pression de gonflage et la charge statique, est différente. Cependant, la réponse spectrale présente une similitude en termes de forme par une réponse sous forme de massifs successifs dans la largeur et la hauteur sont fonction des efforts externes appliquées à l'enveloppe pneumatique.

A partir de ce constat, il s'avère que l'analyse du premier massif est suffisamment discriminante pour déterminer la déformation de l'enveloppe pneumatique suivant ces variations d'efforts externes bien que cela puisse ne pas être suffisant pour des variations plus faibles d'efforts externes appliqués à l'enveloppe pneumatique.

Les grandeurs spectrales telle que la valeur maximale, la valeur médiane, la valeur moyenne, la bande passant, l'aire sous la courbe associée au premier massif sont tous des critères potentiels de différenciation de la déformation de l'enveloppe pneumatique. Mais aussi, la fréquence de la valeur médiane, la fréquence de la valeur moyenne, la fréquence de la valeur maximale sont des critères secondaires de la déformation de l'enveloppe pneumatique qui présentent une dynamique moins forte pourtant discriminante.

On peut alors attribuer une valeur de déformation de l'enveloppe pneumatique par l'intermédiaire d'une fonction d'une ou de plusieurs grandeurs spectrales sous la forme d'un vecteur ou d'un scalaire qui pondère éventuellement les diverses composantes du vecteur. Préférentiellement, il a été constaté que la valeur maximale 105bis et 106bis du premier massif est un très bon indicateur de la déformation de l'enveloppe pneumatique, ce qui permet de déterminer la déformation de l'enveloppe pneumatique au travers d'une fonction affine de la valeur maximale du premier massif. Cependant, la détermination de la déformation de l'enveloppe pneumatique peut être plus sophistiquée en tenant compte d'autres grandeurs spectrales liés aussi à des massifs spectraux secondaires.

## Revendications

1. Méthode d'obtention de la déformation d'une enveloppe pneumatique soumise à un effort extérieur, dans un état monté sur roue afin de constituer un ensemble monté pneumatique en condition de roulage à une vitesse de rotation W, ladite enveloppe pneumatique ayant un sommet, destinée à être en contact avec le sol qui est de révolution autour d'un axe naturel de rotation, comportant les étapes suivantes :

   - Fixer au moins un capteur sur l'enveloppe pneumatique au droit du sommet de l'enveloppe pneumatique apte à générer au moins un signal de sortie sensible au mouvement subi par ledit capteur dans l'enveloppe pneumatique ;
   - Réaliser l'acquisition (201) d'au moins un premier signal Sig (101) temporel comprenant au moins l'amplitude du mouvement lors d'un roulage ;
   - Délimiter le premier signal sur un nombre $N^{TdR}$ de tours de roue afin de construire un signal tour de roue $Sig^{TdR}$ ;
   - Déterminer au moins une vitesse de référence $W^{reference}$ (202) associée a au moins une partie du signal tour de roue $Sig^{TdR}$
   - Normaliser (203) la au moins une partie du signal tour de roue par une grandeur qui est une fonction F de la au moins une vitesse de référence $W^{reference}$ ;
   - Rééchantillonner angulairement (204) la au moins une partie du signal tour de roue
   - Obtenir le signal spectral (205) spect(Sig) de la au moins une partie du signal tour de roue normalisée et rééchantillonné angulairement ;
   - Définir au moins une grandeur spectrale (206) sur le signal spectral spect(Sig) ;
   - Identifier la déformation de l'enveloppe pneumatique $Def_{\%}$ (207) comme une fonction G de la au moins une grandeur spectrale.

**2.** Méthode d'obtention de la déformation d'une enveloppe pneumatique soumise à un effort extérieur selon la revendications 1 dans laquelle, l'étape de détermination de la vitesse de référence W$^{reference}$ (202) consiste à effectuer le rapport de la variation angulaire sur la durée temporelle séparant deux positions azimutales du capteur dans de l'enveloppe pneumatique autour de l'axe naturel de rotation à partir du signal tour de roue Sig$^{TdR}$ (101) ou à partir d'un signal phasé avec le signal tour de roue Sig$^{TdR}$ (101), suivant la formule suivante :

[Math 1]

$$W^{Reference} = \frac{\Delta(\alpha)}{\Delta(t)}$$

Où $\alpha$ est la position angulaire et t est l'abscisse temporelle associée à la position angulaire

**3.** Méthode d'obtention de la déformation d'une enveloppe pneumatique soumise à un effort extérieur selon la revendications 2 dans laquelle les positions angulaires de l'enveloppe pneumatique sont comprises dans le groupe comprenant une position angulaire détectable sur le signal tour de roue Sig$^{TdR}$ correspondant à l'entrée dans l'aire de contact, la sortie de l'aire de contact ou la position centrale de l'aire de contact ou toute position angulaire définie à partir du signal phasé avec le signal tour de roue Sig$^{TdR}$.

**4.** Méthode d'obtention de la déformation d'une enveloppe pneumatique soumise à un effort extérieur selon l'une des revendications 1 à 3 dans laquelle le pas angulaire est inférieur à 18 degrés, préférentiellement inférieur à 6 degrés, très préférentiellement inférieure à 3 degrés.

**5.** Méthode d'obtention de la déformation d'une enveloppe pneumatique soumise à un effort extérieur selon l'une des revendications 1 à 4 dans laquelle la au moins une grandeur spectrale est identifiée sur le premier massif fréquentiel positif du signal spectral (spect(Sig)).

**6.** Méthode d'obtention de la déformation d'une enveloppe pneumatique soumise à un effort extérieur selon la revendication 5 dans laquelle la au moins une grandeur spectrale identifiée est comprise dans le groupe comprenant la valeur maximale, la valeur médiane, la valeur moyenne, la bande passant du premier massif, aire sous la courbe du premier massif., la fréquence de la valeur médiane, la fréquence de la valeur moyenne, la fréquence de la valeur maximale.

**7.** Méthode d'obtention de la déformation d'une enveloppe pneumatique soumise à un effort extérieur selon l'une des revendications 1 à 6 dans laquelle la méthode comprend une étape d'agrégation des données de la au moins une partie du signal tour de roue Sig$^{TdR}$ rééchantillonnée angulairement et normalisée sur au moins une sous partie de la au moins une partie du signal tour de roue Sig$^{TdR}$ rééchantillonnée angulairement et normalisée, la sous partie de la au moins une partie du signal tour de roue Sig$^{TdR}$ rééchantillonnée angulairement et normalisée devenant la au moins une partie du signal tour de roue Sig$^{TdR}$ rééchantillonnée angulairement et normalisée.

**8.** Méthode d'obtention de la déformation d'une enveloppe pneumatique soumise à un effort extérieur selon la revendication 7 dans laquelle la sous partie de la au moins une partie du signal tour de roue Sig$^{TdR}$ est un multiple entier du tour de roue.

**9.** Méthode d'obtention de la déformation d'une enveloppe pneumatique soumise à un effort extérieur selon l'une des revendications 7 à 8 dans laquelle l'étape d'agrégation des données (205) comprend une des méthodes comprises dans le groupe comprenant la moyenne sur un intervalle de décile, la médiane, la sélection ou l'intervalle de déciles, les méthodes d'interpolation, la moyenne pondérée ou non, l'optimisation de modèle paramétrique de la déformée du pneumatique.

**10.** Méthode d'obtention de la déformation d'une enveloppe pneumatique soumise à un effort extérieur selon l'une des revendications 1 à 9 dans laquelle le capteur est compris dans le groupe comprenant accéléromètre, capteur piézoélectrique, capteur magnétique, capteur inductif, capteur capacitif.

**11.** Méthode d'obtention de la déformation d'une enveloppe pneumatique soumise à un effort extérieur selon l'une des revendications 1 à 10 dans laquelle, le mouvement du capteur est décrit par l'accélération.

12. Méthode d'obtention de la déformation d'une enveloppe pneumatique soumise à un effort extérieur selon la revendication 11 dans laquelle, ayant phasé le signal tour de roue Sig$^{TdR}$ (101par rapport à une position angulaire de l'enveloppe pneumatique, une correction Corr est apportée au signal tour de roue Sig$^{TdR}$ pour prendre en compte l'effet de la gravité terrestre avant l'étape de normalisation.

13. Méthode d'obtention de la déformation d'une enveloppe pneumatique soumise à un effort extérieur selon l'une des revendications 11 à 12 dans laquelle, le premier signal Sig comprend l'amplitude du mouvement selon la direction normale au sommet de l'enveloppe pneumatique.

14. Méthode d'obtention de la déformation d'une enveloppe pneumatique soumise à un effort extérieur selon l'une des revendications 1 à 13 dans laquelle la fonction F est proportionnelle au carré de la vitesse de référence W$^{reference}$ .

15. Méthode d'obtention de la déformation d'une enveloppe pneumatique soumise à un effort extérieur selon l'une des revendications 1 à 14 dans laquelle la fonction G est une fonction linéaire de la au moins une grandeur spectrale.

**Patentansprüche**

1. Verfahren zur Ermittlung der Verformung eines Luftreifens, der einer äußeren Beanspruchung ausgesetzt ist, in einem am Rad zur Bildung einer montierten Reifeneinheit montierten Zustand unter Fahrbedingungen bei einer Drehgeschwindigkeit W, wobei der Luftreifen einen Gürtel aufweist, der dazu bestimmt ist, mit dem Boden in Kontakt zu sein, und um eine natürliche Drehachse dreht, umfassend die folgenden Schritte:

- Befestigen mindestens eines Sensors an dem Luftreifen direkt unter dem Gürtel des Luftreifens, der geeignet ist, mindestens ein Ausgangssignal zu erzeugen, das für die Bewegung empfindlich ist, die der Sensor in dem Luftreifen erfährt;
- Durchführen der Erfassung (201) mindestens eines ersten zeitlichen Signals Sig (101), das mindestens die Amplitude der Bewegung bei einem Fahren beinhaltet;
- Begrenzen des ersten Signals auf eine Anzahl N$^{TdR}$ von Radumdrehungen, um ein Radumdrehungssignal Sig$^{TdR}$ zu erstellen;
- Bestimmen mindestens einer Referenzgeschwindigkeit W$^{reference}$ (202), die mindestens einem Teil des Radumdrehungssignals Sig$^{TdR}$ zugeordnet ist
- Normalisieren (203) des mindestens einen Teils des Radumdrehungssignals durch eine Größe, die eine Funktion F der mindestens einen Referenzdrehzahl W$^{reference}$ ist;
- Winkelmäßiges Neuabtasten (204) des mindestens einen Teils des Radumdrehungssignals
- Ermitteln des spektralen Signals (205) spect(Sig) des mindestens einen Teils des normalisierten und winkelmäßig neuabgetasteten Radumdrehungssignals;
- Definieren mindestens einer spektralen Größe (206) an dem spektralen Signal spect(Sig);
- Identifizieren der Verformung des Luftreifens Def$_{\%}$ (207) als eine Funktion G der mindestens einen spektralen Größe.

2. Verfahren zur Ermittlung der Verformung eines Luftreifens, der einer äußeren Beanspruchung ausgesetzt ist, nach Anspruch 1, wobei der Schritt des Bestimmens der Referenzgeschwindigkeit W$^{reference}$ (202) darin besteht, das Verhältnis der Winkeländerung zu der zeitlichen Dauer, die zwei azimutale Positionen des Sensors in dem Luftreifen um die natürliche Drehachse trennt, ausgehend von dem Radumdrehungssignal Sig$^{TdR}$ (101) oder ausgehend von einem mit dem Radumdrehungssignal Sig$^{TdR}$ (101) in Phase gebrachten Signal gemäß der folgenden Formel zu bestimmen:

[Math 1]
$$W^{Reference} = \frac{\Delta(\alpha)}{\Delta(t)}$$

wobei $\alpha$ die Winkelposition ist und t die der Winkelposition zugeordnete Zeitabszisse ist.

3. Verfahren zur Ermittlung der Verformung eines Luftreifens, der einer äußeren Beanspruchung ausgesetzt ist, nach Anspruch 2, wobei die Winkelpositionen des Luftreifens in der Gruppe enthalten sind, die eine an dem Radumdrehungssignal Sig$^{TdR}$ detektierbare Winkelposition, die dem Eintritt in die Kontaktfläche, dem Austritt aus der Kontaktfläche oder der zentralen Position der Kontaktfläche entspricht, oder jede Winkelposition, die ausgehend von dem mit dem Radumdrehungssignal Sig$^{TdR}$ in Phase gebrachten Signal definiert wird, beinhaltet.

4. Verfahren zur Ermittlung der Verformung eines Luftreifens, der einer äußeren Beanspruchung ausgesetzt ist, nach einem der Ansprüche 1 bis 3, wobei die Winkelteilung kleiner als 18 Grad, bevorzugt kleiner als 6 Grad, besonders bevorzugt kleiner als 3 Grad ist.

5. Verfahren zur Ermittlung der Verformung eines Luftreifens, der einer äußeren Beanspruchung ausgesetzt ist, nach einem der Ansprüche 1 bis 4, wobei die mindestens eine spektrale Größe an dem ersten positiven Frequenzblock des spektralen Signals (spect(Sig)) identifiziert wird.

6. Verfahren zur Ermittlung der Verformung eines Luftreifens, der einer äußeren Beanspruchung ausgesetzt ist, nach Anspruch 5, wobei die mindestens eine identifizierte spektrale Größe in der Gruppe enthalten ist, die den Maximalwert, den Medianwert, den Mittelwert, die Bandbreite des ersten Blocks, die Fläche unter der Kurve des ersten Blocks, die Frequenz des Medianwerts, die Frequenz des Mittelwerts, die Frequenz des Maximalwerts beinhaltet.

7. Verfahren zur Ermittlung der Verformung eines Luftreifens, der einer äußeren Beanspruchung ausgesetzt ist, nach einem der Ansprüche 1 bis 6, wobei das Verfahren einen Schritt des Aggregierens der Daten des mindestens einen winkelmäßig neuabgetasteten und normalisierten Teils des Radumdrehungssignals Sig$^{TdR}$ über mindestens einen Teilbereich des mindestens einen winkelmäßig neuabgetasteten und normalisierten Teils des Radumdrehungssignals Sig$^{TdR}$ beinhaltet, wobei der Teilbereich des mindestens einen winkelmäßig neuabgetasteten und normalisierten Teils des Radumdrehungssignals Sig$^{TdR}$ der mindestens eine winkelmäßig neuabgetastete und normalisierte Teil des Radumdrehungssignals Sig$^{TdR}$ wird.

8. Verfahren zur Ermittlung der Verformung eines Luftreifens, der einer äußeren Beanspruchung ausgesetzt ist, nach Anspruch 7, wobei der Teilbereich des mindestens einen Teils des Radumdrehungssignals Sig$^{TdR}$ ein ganzes Vielfaches der Radumdrehung ist.

9. Verfahren zur Ermittlung der Verformung eines Luftreifens, der einer äußeren Beanspruchung ausgesetzt ist, nach einem der Ansprüche 7 bis 8, wobei der Schritt des Aggregierens der Daten (205) eines der Verfahren beinhaltet, die in der Gruppe enthalten sind, die den Mittelwert über ein Dezilintervall, den Medianwert, die Auswahl oder das Intervall von Dezilen, die Interpolationsverfahren, den gewichteten oder nicht gewichteten Mittelwert, die Optimierung eines parametrischen Modells der Durchbiegung des Reifens beinhaltet.

10. Verfahren zur Ermittlung der Verformung eines Luftreifens, der einer äußeren Beanspruchung ausgesetzt ist, nach einem der Ansprüche 1 bis 9, wobei der Sensor in der Gruppe enthalten ist, die Beschleunigungsmesser, piezoelektrischen Sensor, Magnetsensor, induktiven Sensor und kapazitiven Sensor beinhaltet.

11. Verfahren zur Ermittlung der Verformung eines Luftreifens, der einer äußeren Beanspruchung ausgesetzt ist, nach einem der Ansprüche 1 bis 10, wobei die Bewegung des Sensors durch die Beschleunigung beschrieben wird.

12. Verfahren zur Ermittlung der Verformung eines Luftreifens, der einer äußeren Beanspruchung ausgesetzt ist, nach Anspruch 11, wobei, nachdem das Radumdrehungssignal Sig$^{TdR}$ (101) in Bezug auf eine Winkelposition des Luftreifens in Phase gebracht wurde, eine Korrektur Corr an dem Radumdrehungssignal Sig$^{TdR}$ vorgenommen wird, um vor dem Schritt des Normalisierens die Wirkung der Erdschwerkraft zu berücksichtigen.

13. Verfahren zur Ermittlung der Verformung eines Luftreifens, der einer äußeren Beanspruchung ausgesetzt ist, nach einem der Ansprüche 11 bis 12, wobei das erste Signal Sig die Amplitude der Bewegung entlang der zum Gürtel des Luftreifens senkrechten Richtung umfasst.

14. Verfahren zur Ermittlung der Verformung eines Luftreifens, der einer äußeren Beanspruchung ausgesetzt ist, nach einem der Ansprüche 1 bis 13, wobei die Funktion F proportional zum Quadrat der Referenzgeschwindigkeit W$^{reference}$ ist.

15. Verfahren zur Ermittlung der Verformung eines Luftreifens, der einer äußeren Beanspruchung ausgesetzt ist, nach einem der Ansprüche 1 bis 14, wobei die Funktion G eine lineare Funktion der mindestens einen spektralen Größe ist.

## Claims

1. Method for ascertaining the deformation of a tyre casing subjected to an external stress in a state mounted on a wheel so as to constitute a pneumatic mounted assembly in rolling state with rotation speed W, said tyre casing having a crown in contact with the ground and in revolution about a natural rotational axis, comprising the following steps:

   - Fastening at least one sensor to the tyre casing at the crown of the tyre casing so as to generate at least one output signal sensitive to the movement of said sensor in the tyre casing;
   - Acquiring (201) at least one first temporal signal Sig (101) comprising at least the amplitude of movement while rolling;
   - Delimiting the first signal over a number $N^{TdR}$ of wheel turns so as to construct a wheel-turn signal $Sig^{TdR}$;
   - Determining (202) at least one reference speed $W^{reference}$ associated with at least one portion of the wheel-turn signal $Sig^{TdR}$;
   - Normalizing (203) the at least one portion of the wheel-turn signal by a variable which is a function F of the at least one reference speed $W^{reference}$;
   - Angularly resampling (204) the at least one portion of the wheel-turn signal;
   - Obtaining (205) the spectral signal spect(Sig) of the at least one portion of the normalized and angularly resampled wheel-turn signal;
   - Defining (206) at least one spectral variable on the spectral signal spect(Sig);
   - Identifying (207) the deformation Def% of the tyre casing as a function G of the at least one spectral variable.

2. Method for ascertaining the deformation of a tyre casing subjected to an external stress as claimed in Claim 1, wherein the step of determining (202) the reference speed $W^{reference}$ consists of establishing the ratio of the angular variation to the temporal duration separating two azimuthal positions of the sensor in the tyre casing around the natural axis of rotation, from the wheel-turn signal $Sig^{TDR}$ (101) or from a signal in phase with the wheel-turn signal $Sig^{TDR}$ (101), according to the following formula:

[Math 1]

$$W^{Reference} = \frac{\Delta(\alpha)}{\Delta(t)}$$

wherein $\alpha$ is the angular position and t is the temporal abscissa associated with the angular position.

3. Method for ascertaining the deformation of a tyre casing subjected to an external stress according to Claim 2, wherein the angular positions of the tyre casing are included in the group comprising an angular position which can be detected from the wheel-turn signal $Sig^{TDR}$, corresponding to the entry into the contact patch, the exit from the contact patch, or the central position of the contact patch, or any defined angular position from the signal in phase with the wheel-turn signal $Sig^{TDR}$.

4. Method for ascertaining the deformation of a tyre casing subjected to an external stress according to any of Claims 1 to 3, wherein the angular pitch is less than 18 degrees, preferably less than 6 degrees, very preferably less than 3 degrees.

5. Method for ascertaining the deformation of a tyre casing subjected to an external stress according to any of Claims 1 to 4, wherein the at least one spectral variable is identified on the first positive frequency block of the spectral signal spect(Sig).

6. Method for ascertaining the deformation of a tyre casing subjected to an external stress according to Claim 5, wherein the at least one identified spectral variable is contained in the group comprising the maximum value, the median value, the mean value, the pass-band of the first block, the area below the curve of the first block, the frequency of the median value, the frequency of the mean value, the frequency of the maximum value.

7. Method for ascertaining the deformation of a tyre casing subjected to an external stress according to any of Claims 1 to 6, wherein the method comprises a step of aggregating the data from the at least one portion of the angularly resampled normalized wheel-turn signal $Sig^{TDR}$ over at least one sub-portion of the at least one portion of the angularly resampled normalized wheel-turn signal $Sig^{TDR}$, the sub-portion of the at least one portion of the angularly resampled normalized wheel-turn signal $Sig^{TDR}$ becoming the at least one portion of the angularly resampled normalized wheel-turn signal $Sig^{TDR}$,

8.  Method for ascertaining the deformation of a tyre casing subjected to an external stress according to Claim 7, wherein the sub-portion of the at least one portion of the wheel-turn signal $Sig^{TDR}$ is an integral multiple of the wheel turn.

9.  Method for ascertaining the deformation of a tyre casing subjected to an external stress according to any of Claims 7 to 8, wherein the data aggregation step (205) comprises one of the methods contained in the group comprising the mean over a decile interval, the median, the selection or interval of deciles, the methods of interpolation, the weighted or non-weighted mean, optimization of the parametric model of tyre deformation.

10. Method for ascertaining the deformation of a tyre casing subjected to an external stress according to any of Claims 1 to 9, wherein the sensor is included in the group comprising accelerometer, piezoelectric sensor, magnetic sensor, inductive sensor, capacitative sensor.

11. Method for ascertaining the deformation of a tyre casing subjected to an external stress according to any of Claims 1 to 10, wherein the movement of the sensor is described by acceleration.

12. Method for ascertaining the deformation of a tyre casing subjected to an external stress according to Claim 11, wherein having phased the wheel-turn signal $Sig^{TdR}$ (101) with respect to an angular position of the tyre casing, a correction Corr is made to the wheel-turn signal $Sig^{TdR}$ to take account of the effect of terrestrial gravity before the normalization step.

13. Method for ascertaining the deformation of a tyre casing subjected to an external stress according to any of Claims 11 to 12, wherein the first signal Sig comprises the amplitude of movement in the direction normal to the crown of the tyre casing.

14. Method for ascertaining the deformation of a tyre casing subjected to an external stress according to any of Claims 1 to 13, wherein the function F is proportional to the square of the reference speed $W^{reference}$.

15. Method for ascertaining the deformation of a tyre casing subjected to an external stress according to any of Claims 1 to 14, wherein the function G is a linear function of the at least one spectral variable.

Acquisition d'un premier signal Sig

En amplitude et discrétisé temporellement

201

Déterminer une vitesse de référence

W$^{référence}$ associée à une partie de Sig

202

Rééchantillonner angulairement Sig

204

Normaliser Sig à l'aide d'une fonction
F de la variable W$^{référence}$

203

Agréger les données de Sig rééchantillonné et
normalisé

208

Obtenir le signal spectral de Sig rééchantillonné
et normalisé

205

Définir une grandeur spectrale

206

Identifier Def% de l'enveloppe pneumatique

à l'aide de la fonction G de la grandeur

207

**FIG. 1**

**FIG. 2**

**FIG. 3**

**FIG. 4**

**FIG. 5**

**FIG. 6**

**RÉFÉRENCES CITÉES DANS LA DESCRIPTION**

**Documents brevets cités dans la description**

- US 2015362542 A1
- US 2020056983 A1
- JP 2014222252 A